# EUROPÄISCHE PATENTANMELDUNG

(11) **EP 4 480 786 A1**
(43) Veröffentlichungstag der Anmeldung: **25.12.2024**
(21) Anmeldenummer: 24179950.1
(22) Anmeldetag: 04.06.2024
(51) Int. Cl.: B62D 5/09, B62D 5/00, B62D 1/22, B62D 15/02

(54) **NUTZFAHRZEUG MIT EINER HYDROSTATISCHEN LENKUNG**

(30) Priorität: 15.06.2023 DE 102023115610
(71) Anmelder: Deere & Company, Moline, IL 61265 (US)
(72) Erfinder: Brocke, Stefan, Mannheim (DE)
(74) Vertreter: Dehnhardt, Florian Christopher

(57) **Zusammenfassung**

Die Erfindung betrifft ein Nutzfahrzeug (10) mit einer hydrostatischen Lenkung, mit einem von den Rädern (36) einer Fahrzeugachse (38) mechanisch getrennten Lenkrad (12) und mit einer hydraulischen Lenksteuereinheit (40). Mittels der hydraulischen Lenksteuereinheit (40) ist ein Hydraulikdruck (P) in Abhängigkeit von einer Drehbewegung des Lenkrades (12) in einen hydraulischen Lenkzylinder (42) einer Lenkeinrichtung (46) für die Räder (36) leitbar. Eine Drehbewegung des Lenkrades (12) ist durch einen Eingangs-Winkelsensor (16) erfassbar. Eine von dem Lenkrad (12) mechanisch getrennte Ausgangs-Lenksäule (30) ist mittels eines Lenkaktuators (24) drehbar und wirkt auf die hydraulische Lenksteuereinheit (40) ein. Eine Steuereinheit (22) ist mit dem Eingangs-Winkelsensor (16) und mit dem Lenkaktuator (24) verbunden zur Ansteuerung des Lenkaktuators (24) in Abhängigkeit von Sensorsignalen des Eingangs-Winkelsensors (16).

## Beschreibung

Die Erfindung betrifft ein Nutzfahrzeug mit einem von den Rädern einer Fahrzeugachse mechanisch getrennten Lenkrad und mit einer hydraulischen Lenksteuereinheit, durch welche ein Hydraulikdruck in Abhängigkeit von einer Drehbewegung des Lenkrades in einen hydraulischen Lenkzylinder einer Lenkeinrichtung an der Fahrzeugachse leitbar ist.

Ein derartiges Lenksystem ermöglicht eine sogenannte hydrostatische Lenkung des Nutzfahrzeugs, bei der der Fahrzeugführer von großen Lenkkräften entlastet ist.

Der vorliegenden Erfindung liegt die Aufgabe zugrunde, ein Nutzfahrzeug hinsichtlich seines Lenksystems weiter zu verbessern.

Diese Aufgabe wird durch ein Nutzfahrzeug mit den Merkmalen des Patentanspruchs 1 gelöst.

Weitere vorteilhafte Ausgestaltungen des erfindungsgemäßen Nutzfahrzeugs gehen aus den Unteransprüchen hervor.

Gemäß Anspruch 1 weist ein Nutzfahrzeug mit einer hydrostatischen Lenkung ein von den Rädern einer Fahrzeugachse mechanisch getrenntes Lenkrad und eine hydraulische Lenksteuereinheit (z.B. Lenkorbitrol) auf, durch welche ein Hydraulikdruck in Abhängigkeit von einer Drehbewegung des Lenkrades in einen hydraulischen Lenkzylinder einer Lenkeinrichtung leitbar ist. Die Lenkeinrichtung befindet sich im Bereich der Fahrzeugachse und lenkt deren Räder. Dabei ist eine Drehbewegung bzw. Lenkbewegung des Lenkrades von einem Eingangs-Winkelsensor erfassbar. Eine von dem Lenkrad mechanisch getrennte Ausgangs-Lenksäule ist mittels eines Lenkaktuators (z.B. Elektromotor) drehbar und wirkt auf die hydraulische Lenksteuereinheit ein. Eine Steuereinheit ist mit dem Eingangs-Winkelsensor und mit dem Lenkaktuator verbunden derart, dass die Steuereinheit den Lenkaktuator in Abhängigkeit von empfangenen Sensorsignalen des Eingangs-Winkelsensors ansteuert.

Für die hydraulische Lenksteuereinheit kann vorzugsweise auf standardmäßig erhältliche Funktionseinheiten (z.B. Lenkorbitrol) zurückgegriffen werden, so dass die benötigten Hydraulikdrücke oder Volumenströme technisch zuverlässig an den oder die Lenkzylinder geleitet werden können. Die hydraulische Lenksteuereinheit und die darauf einwirkende Ausgangs-Lenksäule sind über den Lenkaktuator mit der signalverarbeitenden elektronischen Steuereinheit und dem Eingangs-Winkelsensor kombiniert. Hierdurch kann eine hydrostatische Lenkung technisch einfach und effizient mit einem Steuersystem kombiniert werden, bei dem ein Lenkbefehl des Lenkrades über die Steuereinheit elektrisch an den Lenkaktuator weitergeleitet wird. Dieses Steuersystem, dessen Struktur zumindest teilweise einem sogenannten Steer-By-Wire-System entsprechen kann, bietet mit geringem technischen Aufwand die Voraussetzung für eine Kombination der Vorteile der hydrostatischen Lenkung mit größerem Lenkkomfort, einfacherer Fahrzeughandhabung und der Möglichkeit eines autonomen Lenkmodus.

Das Nutzfahrzeug ist vorzugsweise als ein land- oder forstwirtschaftliches Nutzfahrzeug (Z.B. Traktor oder Schlepper) oder als eine Baumaschine ausgebildet.

Die mit dem oder den hydraulischen Lenkzylinder(n) verbundene und im Bereich der Fahrzeugachse angeordnete Lenkeinrichtung kann übliche Bestandteile wie etwa Spurstange(n), Spurstangengelenke und Achsschenkel enthalten. Der Lenkzylinder ist vorzugsweise als ein doppeltwirkender Zylinder, insbesondere Gleichlaufzylinder, ausgebildet und weist hydraulische Anschlüsse für den Anschluss der hydraulischen Lenksteuereinheit auf. Über eine Kolbenstange oder zwei benachbarte Kolbenstangen ist der Lenkzylinder mit der Lenkeinrichtung mechanisch verbunden.

In einer bevorzugten Ausführungsform ist ein Ausgangs-Winkelsensor vorgesehen, welcher mit der Steuereinheit verbunden ist. Der Ausgangs-Winkelsensor kann eine Drehbewegung der Ausgangs-Lenksäule erfassen, so dass das Drehverhalten der Ausgangs-Lenksäule von der Steuereinheit überwacht wird. Dies unterstützt eine technisch präzise wirkende Lenksteuerung.

Weiter bevorzugt ist das Lenkrad mittels eines Eingangs-Aktuators (z.B. ein Elektromotor) drehbar, welcher mit der Steuereinheit verbunden ist bzw. von der Steuereinheit ansteuerbar ist. Hierdurch kann die Steuereinheit eine vom aktuellen Fahrweg- und Fahrzeugzustand abhängige Rückkopplung an das Lenkrad senden. Der Fahrzeugführer erhält somit die von herkömmlichen Lenkungen gewohnte Rückkopplung. Dies unterstützt den Fahr- und Lenkkomfort des Nutzfahrzeugs. In diesem Zusammenhang kann der Eingangs-Aktuator für unterschiedliche Anwendungen herangezogen werden wie etwa eine aktive Lenkradrückstellung (z.B. in eine Geradeausstellung), geschwindigkeitsabhängige Lenkrückkopplung, fahrwegabhängige Lenkung, Lenkkorrekturen bei Geradeausfahrt, haptische Realisierung eines Lenk-Endanschlags.

Vorzugsweise ist eine Drehbewegung des Lenkrades von einem Drehmomentsensor erfassbar, welcher mit der Steuereinheit verbunden ist bzw. an die Steuereinheit angeschlossen ist. Hierdurch kann die Steuereinheit zusätzliche Signale für eine technisch exakte Lenksteuerung und für eine fahrsituationsgetreue Rückkopplung an das Lenkrad und den Fahrzeugführer berücksichtigen.

Zur Drehung des Lenkrades kann der Eingangs-Aktuator das Lenkrad unmittelbar drehbeaufschlagen oder mittelbar drehbeaufschlagen. Bei der mittelbaren Drehbeaufschlagung wirkt der Eingangs-Aktuator vorzugsweise auf eine Verlängerung der Lenkrad-Nabe ein, welche von der Ausgangs-Lenksäule mechanisch getrennt ist. Insbesondere wirkt der Eingangs-Aktuator auf eine mit dem Lenkrad drehfest verbundene Eingangs-Lenksäule ein, welche von der Ausgangs-Lenksäule mechanisch getrennt ist. Außerdem können Drehbewegungen der Eingangs-Lenksäule von dem Eingangs-Winkelsensor und/oder dem Drehmomentsensor erfasst werden, um Drehbewegungen des Lenkrades technisch einfach zu detektieren bzw. zu erfassen.

Weiter vorzugsweise werden der Lenkaktuator und der Eingangs-Aktuator für ihren Betrieb mit elektrischer Energie versorgt. Insbesondere sind diese Funktionseinheiten als Elektromotoren ausgebildet. Für eine elektrisch zuverlässige Betriebsweise können die elektrischen Aktuatoren an einen Generator und/oder an eine elektrische Speichereinheit (z.B. Batterie, Akku) am Nutzfahrzeug elektrisch angeschlossen sein. Insbesondere sind die Aktuatoren an beide elektrische Quellen - also an den Generator und an die elektrische Speichereinheit - angeschlossen, so dass eine geeignete Versorgungsredundanz für den Fall eines technischen Ausfalls gewährleistet ist.

Die vorgenannte Versorgungsredundanz wird vorzugsweise dadurch verbessert, dass der Generator an einen Speichereingang der elektrischen Speichereinheit angeschlossen ist.

In einer weiteren bevorzugten Ausführungsform wirkt der Lenkaktuator auf ein Lenkorbitrol der hydraulischen Lenksteuereinheit ein, indem der Lenkaktuator von der elektronischen Steuereinheit für eine Drehbewegung bzw. Rotation angesteuert wird, um die Ausgangs-Lenksäule und somit auch das Lenkorbitrol anzutreiben. Hierdurch kann auch der Hydraulikdruck für den oder die Lenkzylinder erzeugt werden. Das Lenkorbitrol ist insbesondere innerhalb der hydraulischen Lenksteuereinheit integriert und mit der Ausgangs-Lenksäule mechanisch kombiniert. Auf diese Weise kann die elektronische Steuereinheit mit dem Lenkaktuator eine Versorgungsredundanz bereitstellen, falls eine den benötigten Hydraulikdruck üblicherweise erzeugende hydraulische Hauptpumpe des Nutzfahrzeugs ausfallen sollte.

Weiter vorzugsweise ist die elektronische Steuereinheit mit einer Automatikeinheit verbunden, welche an eine Benutzer-Schnittstelle (z.B. Bildschirm, Dateneingabeeinheit) und/oder an ein Positionserfassungssystem (z.B. GPS) und/oder an eine fahrzeugbezogene Steuereinrichtung des Nutzfahrzeugs angeschlossen. Die fahrzeugbezogene Steuereinrichtung kann vorzugsweise fahrzeugbezogene physikalische Größen und Zustände erfassen oder verarbeiten. Sie ist insbesondere an einen Kommunikationsbus (z.B. ISO, CAN) des Nutzfahrzeugs angeschlossen. Der datentechnische Anschluss an die Automatikeinheit ermöglicht es der elektronischen Steuereinheit, für die Lenksteuerung zusätzliche Daten zu berücksichtigen, wie etwa fahrzeugbezogene aktuelle Zustände (z.B. aktuelle Fahrzeuggeschwindigkeit) und über die Benutzer-Schnittstelle definierte Einstellungen. Hierdurch kann auch eine gewünschte Lenkübersetzung technisch einfacher erreicht oder verändert werden, wodurch vorteilhaft der Lenkaufwand reduziert und die Lenkpräzision verbessert werden kann. Die Verarbeitung von Positionsdaten und weiteren fahrzeugbezogenen physikalischen Größen des Nutzfahrzeugs in der elektronischen Steuereinheit ermöglichen auch technisch einfach einen autonomen Lenkmodus. Hierbei erhält die Steuereinheit entsprechende Daten bzw. Signale von der vorgenannten Automatikeinheit. In dem autonomen Lenkmodus ist der Eingangs-Aktuator und somit auch das Lenkrad vorzugsweise stillstehend.

Insbesondere ist die Steuereinheit mit einem im Bereich der Fahrzeugachse angeordneten Lenkwinkelsensor verbunden. Hierdurch kann die Lenksteuerung technisch einfach einen jeweils aktuellen Lenkwinkel des Nutzfahrzeugs berücksichtigen, wodurch die Lenkung beispielsweise in dem autonomen Lenkmodus noch präziser durchgeführt werden kann.

In einer weiteren bevorzugten Ausführungsform ist die hydraulische Lenksteuereinheit zwischen einer von einem Antriebsmotor des Nutzfahrzeugs angetriebenen Hydraulikpumpe bzw. Hauptpumpe und dem/den vorhandenen Lenkzylinder(n) hydraulisch zwischengeschaltet. Diese technisch bewährte hydraulische Anordnung der verschiedenen Funktionseinheiten unterstützt eine effiziente Lenksteuerung des Nutzfahrzeugs.

Das erfindungsgemäße Nutzfahrzeug wird im Folgenden anhand der beigefügten Zeichnung näher erläutert.

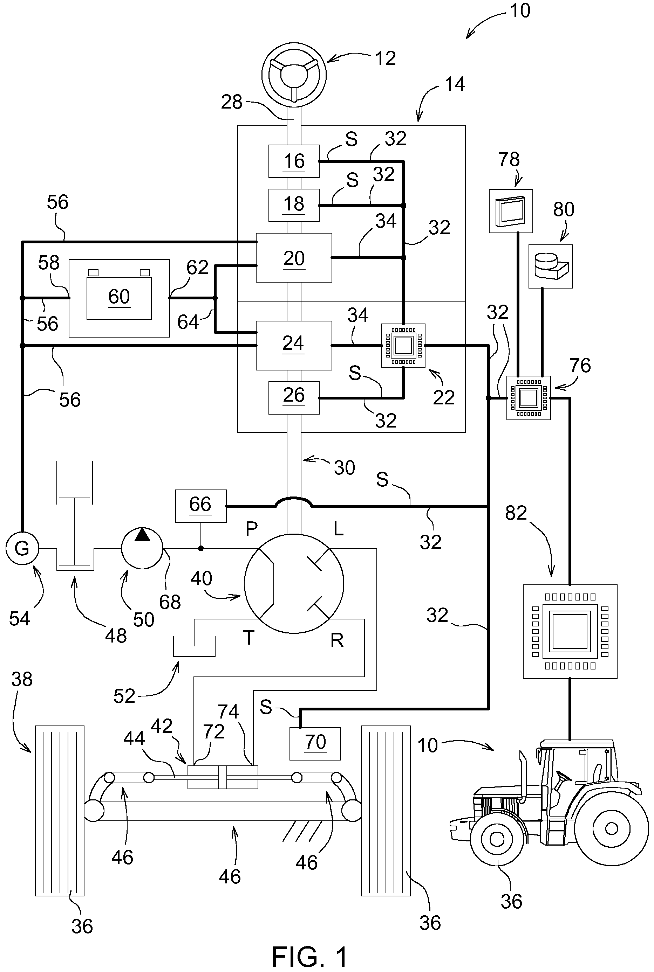

Fig. 1 zeigt ein landwirtschaftliches Nutzfahrzeug 10, insbesondere einen Traktor oder Schlepper, mit einem Lenkrad 12 und einer mehrere Funktionseinheiten umfassenden Lenksteuerung 14. Insbesondere umfasst die Lenksteuerung 14 einen Eingangs-Winkelsensor 16, einen Drehmomentsensor 18, einen Eingangs-Aktuator 20, eine elektronische Steuereinheit 22, einen Lenkaktuator 24 und einen Ausgangs-Winkelsensor 26.

Der Eingangs-Aktuator 20 wird von der Steuereinheit 22 angesteuert und kann eine mit dem Lenkrad 12 drehfest verbundene Eingangs-Lenksäule 28 antreiben. Auch der Lenkaktuator 26 wird von der Steuereinheit 22 angesteuert und kann eine Ausgangs-Lenksäule 30 antreiben. Während Drehbewegungen der Eingangs-Lenksäule 28 von dem Eingangs-Winkelsensor 16 erfasst werden, werden Drehbewegungen der Ausgangs-Lenksäule 30 von dem Ausgangs-Winkelsensor 26 erfasst. Die Sensorsignale S der Sensoren 16, 26 werden über Datenleitungen eines Leitungsnetzwerkes 32 an die Steuereinheit 22 gesendet und dort verarbeitet. Über Steuerleitungen 34 steuert die Steuereinheit 22 die beiden Aktuatoren 20, 24 an.

Die Lenksteuerung 14 dient einer Lenkung der Räder 36 einer vorderen Fahrzeugachse 38 des Nutzfahrzeugs 10. Eine benutzergesteuerte Lenkung erfolgt ausgehend von dem Lenkrad 12 über die Lenksteuerung 14, eine hydraulische Lenksteuereinheit 40, einen hydraulischen Lenkzylinder 42 und dessen Kolbenstange(n) 44, welche mit einer Lenkeinrichtung 46 für die Räder 36 mechanisch verbunden ist bzw. sind.

Das Lenkrad 12 ist von den Rädern 36 mechanisch getrennt. Die Eingangs-Lenksäule 28 und die Ausgangs-Lenksäule 30 sind ebenfalls voneinander mechanisch getrennt.

Die hydraulische Lenksteuereinheit 40 ist zwischen einer von einem Antriebsmotor 48 (insbesondere Verbrennungsmotor) des Nutzfahrzeugs 10 angetriebenen Hydraulikpumpe 50 und dem Lenkzylinder 42 zwischengeschaltet. Die hydraulischen Funktionseinheiten 40, 42 sind somit in einen Hydraulikkreislauf mit der Hydraulikpumpe 50 und einem Hydraulikbehälter 52 (Tank) integriert.

Der Antriebsmotor 48 treibt einen Generator 54 an, welcher über Versorgungsleitungen 56 an die beiden Aktuatoren 20, 24 und an einen Speichereingang 58 einer elektrischen Speichereinheit 60 elektrisch angeschlossen ist. Ein Speicherausgang 62 der Speichereinheit 60 ist über weitere Versorgungsleitungen 64 ebenfalls an die beiden Aktuatoren 20, 24 elektrisch angeschlossen, welche insbesondere als Elektromotoren ausgebildet sind.

Ein Drucksensor 66 erfasst einen Hydraulikdruck an einem Pumpenausgang 68 der Hydraulikpumpe 50. Entsprechende Sensorsignale S des Drucksensors 66 werden über eine Datenleitung des Leitungsnetzwerkes 32 an die Steuereinheit 22 gesendet.

Im Bereich der Fahrzeugachse 38 bzw. im Bereich der Lenkeinrichtung 46 ist ein Lenkwinkelsensor 70 angeordnet, dessen Sensorsignale S über eine Datenleitung des Leitungsnetzwerkes 32 an die Steuereinheit 22 gesendet werden.

An der Lenksteuereinheit 40 ist die Ausgangs-Lenksäule 30 montiert, welche in üblicher Weise mit einem Lenkorbitrol 40 verbunden ist und abhängig von einer Betätigung des Lenkaktuators 26 Hydraulikflüssigkeit zu dem Lenkzylinder 42 fördert. Das Lenkorbitrol 40 kann auch dazu genutzt werden, im Falle einer Störung an der Hydraulikpumpe 50 ausreichend Hydraulikdruck an den Lenkzylinder 42 zu leiten. Die Lenksteuereinheit 40 weist hydraulische Anschlüsse P, T, R, L auf. Daran sind der Pumpenausgang 68 (P), der Hydraulikbehälter 52 (T) und zwei Zylinderanschlüsse 72, 74 (R, L) hydraulisch angeschlossen.

Über das Leitungsnetzwerk 32 ist die Steuereinheit 22 mit einer steuergeräteartige Automatikeinheit 76 verbunden. Letztere wiederum ist an verschiedene Bestandteile des Nutzfahrzeugs 10 angeschlossen, wie etwa an eine Benutzer-Schnittstelle 78 zur Visualisierung von Daten für einen Benutzer und Eingabe von Daten durch den Benutzer, ein Positionserfassungssystem 80 (z.B. GPS) und eine fahrzeugbezogene Steuereinrichtung 82, welche beispielsweise verschiedene Fahrzeugfunktionen erfassen und/oder steuern kann und an einen fahrzeuginternen Kommunikationsbus (z.B. ISO, CAN) angeschlossen sein kann.

Mittels der Automatikeinheit 76 kann ein autonomer Lenkmodus realisiert werden, bei dem das Lenkrad 12 und der Eingangs-Aktuator 20 stillstehen. Hierbei sendet die Automatikeinheit 76 entsprechende Steuersignale an die Steuereinheit 22, welche neben anderen Daten und Sensorsignalen S insbesondere die Fahrzeug-Positionsdaten von dem Positionserfassungssystem 80 und Lenkwinkeldaten von dem Lenkwinkelsensor 70 berücksichtigen kann und den Lenkaktuator 24 entsprechend ansteuern kann.

In einem benutzergesteuerten Lenkmodus gibt der Benutzer bzw. Fahrzeugführer durch Drehung des Lenkrades 12 die Lenkbefehle vor, welche von dem Eingangs-Winkelsensor 16 erfasst werden. In Abhängigkeit von den Sensorsignalen S des Eingangs-Winkelsensors 16 und ggf. weiteren Signalen und Daten (z.B. des Ausgangs-Winkelsensors 26) steuert die Steuereinheit 22 den Lenkaktuator 24 an. Hierdurch kann von der Hydraulikpumpe 50 kommender Hydraulikdruck über die Lenksteuereinheit 40 an den Lenkzylinder 42 für die gewünschte Lenkung der Räder 36 geleitet werden. Für eine fahrsituationsgetreue Rückkopplung an den Benutzer bzw. Fahrzeugführer kann die Steuereinheit 22 den Eingangs-Aktuator 20 ansteuern, um eine der Fahrsituation entsprechende Drehbewegung der Eingangs-Lenksäule 28 zu erzeugen.

## Patentansprüche

1. Nutzfahrzeug mit einer hydrostatischen Lenkung, mit einem von den Rädern (36) einer Fahrzeugachse (38) mechanisch getrennten Lenkrad (12) und mit einer hydraulischen Lenksteuereinheit (40), durch welche ein Hydraulikdruck (P) in Abhängigkeit von einer Drehbewegung des Lenkrades (12) in einen hydraulischen Lenkzylinder (42) einer Lenkeinrichtung (46) für die Räder (36) leitbar ist, wobei
- eine Drehbewegung des Lenkrades (12) durch einen Eingangs-Winkelsensor (16) erfassbar ist,
- eine von dem Lenkrad (12) mechanisch getrennte Ausgangs-Lenksäule (30) mittels eines Lenkaktuators (24) drehbar ist und auf die hydraulische Lenksteuereinheit (40) einwirkt, und
- eine Steuereinheit (22) mit dem Eingangs-Winkelsensor (16) und mit dem Lenkaktuator (24) verbunden ist zur Ansteuerung des Lenkaktuators (24) in Abhängigkeit von Sensorsignalen (S) des Eingangs-Winkelsensors (16).

2. Nutzfahrzeug nach Anspruch 1, **dadurch gekennzeichnet, dass** eine Drehbewegung der Ausgangs-Lenksäule (30) von einem Ausgangs-Winkelsensor (26) erfassbar ist, welcher mit der Steuereinheit (22) verbunden ist.

3. Nutzfahrzeug nach Anspruch 1 oder 2, **dadurch gekennzeichnet, dass** das Lenkrad (12) mittels eines Eingangs-Aktuators (20) drehbar ist, welcher mit der Steuereinheit (22) verbunden ist.

4. Nutzfahrzeug nach einem der vorhergehenden Ansprüche, **dadurch gekennzeichnet, dass** eine Drehbewegung des Lenkrades (12) von einem Drehmomentsensor (18) erfassbar ist, welcher mit der Steuereinheit (22) verbunden ist.

5. Nutzfahrzeug nach einem der vorhergehenden Ansprüche, **dadurch gekennzeichnet, dass** das Lenkrad (12) mit einer von der Ausgangs-Lenksäule (30) mechanisch getrennten Eingangs-Lenksäule (28) drehfest verbunden ist,
- deren Drehbewegung von dem Eingangs-Winkelsensor (16) und/oder dem Drehmomentsensor (18) erfassbar ist, und/oder
- welche mittels des Eingangs-Aktuators (20) drehbar ist.

6. Nutzfahrzeug nach einem der vorhergehenden Ansprüche, **dadurch gekennzeichnet, dass** ein Generator (54) des Nutzfahrzeugs (10) und/oder eine elektrische Speichereinheit (60)
- an den Lenkaktuator (24) angeschlossen ist, und/oder
- an den Eingangs-Aktuator (20) angeschlossen ist.

7. Nutzfahrzeug nach Anspruch 6, **dadurch gekennzeichnet, dass** der Generator (54) an einen Speichereingang (58) der elektrischen Speichereinheit (60) angeschlossen ist.

8. Nutzfahrzeug nach einem der vorhergehenden Ansprüche, **dadurch gekennzeichnet, dass** der Lenkaktuator (26) auf eine hydraulische Pumpe der hydraulischen Lenksteuereinheit (40) einwirkt zur Erzeugung von Hydraulikdruck für den Lenkzylinder (42).

9. Nutzfahrzeug nach einem der vorhergehenden Ansprüche, **dadurch gekennzeichnet, dass** die Steuereinheit (22) mit einer Automatikeinheit (76) verbunden ist, welche an
- eine Benutzer-Schnittstelle (78), und/oder
- ein Positionserfassungssystem (80), und/oder
- eine fahrzeugbezogene Steuereinrichtung (82) des Nutzfahrzeugs (10) angeschlossen ist.

10. Nutzfahrzeug nach einem der vorhergehenden Ansprüche, **dadurch gekennzeichnet, dass** die Steuereinheit (22) mit einem im Bereich der Fahrzeugachse (38) angeordneten Lenkwinkelsensor (70) verbunden ist.

11. Nutzfahrzeug nach einem der vorhergehenden Ansprüche, **dadurch gekennzeichnet, dass** die hydraulische Lenksteuereinheit (40) zwischen einer von einem Antriebsmotor (48) des Nutzfahrzeugs (10) angetriebenen Hydraulikpumpe (50) und dem Lenkzylinder (42) hydraulisch zwischengeschaltet ist.
